# EUROPEAN PATENT APPLICATION

(11) **EP 2 857 911 A2**
(43) Date of publication of application: **08.04.2015**
(21) Application number: 14187269.7
(22) Date of filing: 01.10.2014
(51) Int. Cl.: G05B 19/042

(54) **Systems and methods for controlling a disconnect switch via a network**

(30) Priority: 01.10.2013 US 201314043640
(71) Applicant: Rockwell Automation Technologies, Inc., Mayfield Heights, OH 44124 (US)
(72) Inventor: Lemberg, Nicholas, Sussex, WI 53089 (US); Mehta, Darshini, Grafton, WI 53024 (US); Breitzmann, Robert, South Russell, OH 44022 (US); Harbaugh, Mark M., Richfield, OH 44286 (US)
(74) Representative: Grünecker Patent- und Rechtsanwälte PartG mbB

(57) **Abstract**

A system for controlling a disconnect switch via a network may include a disconnect switch and a drive. The disconnect switch may receive alternating current (AC) power from an AC power supply, and the drive may then receive the AC power via the disconnect switch. The drive may include a processor that may communicatively couple to the disconnect switch. As such, the processor may control a drive operation that corresponds to the drive and control a disconnect operation that corresponds to the disconnect switch.

## Description

### BACKGROUND

Embodiments of the present disclosure relate generally to industrial automation systems. More specifically, the present disclosure relates to controlling the flow of electricity through an industrial automation system.

Industrial automation systems may employ various types of electronic devices such as an alternating current (AC) drive to provide a controllable AC voltage to various devices within the industrial automation system. The AC drive may receive AC voltage from an AC voltage supply and convert the received AC voltage into direct current (DC) voltage using a rectifier. The AC drive may then convert the DC voltage into a controllable AC voltage using an inverter. In some cases, a regenerative AC drive may provide regenerated power back to a grid or to the AC voltage supply from the inverter.

In certain situations, conditions may arise that result in undesirable outcomes, including system damage, with respect to a coupling between the AC voltage supply and the AC drive. For example, the AC voltage supply may provide an undesired surge of voltage to the AC drive. Accordingly, it is now recognized that it may be desirable to isolate the AC drive from the AC voltage supply under certain conditions.

### BRIEF DESCRIPTION

Certain embodiments commensurate in scope with the original claims are summarized below. These embodiments are not intended to limit the scope of the claims, but rather these embodiments are intended only to provide a brief summary of possible forms of the presently disclosed systems and techniques. Indeed, the claims may encompass a variety of forms that may be similar to or different from the embodiments set forth below.

In one embodiment, a system for controlling a disconnect switch via a network may include a disconnect switch and a drive. The disconnect switch may receive alternating current (AC) power from an AC power supply, and the drive may then receive the AC power via the disconnect switch. The drive may include a processor that may communicatively couple to the disconnect switch. As such, the processor may control a drive operation that corresponds to the drive and control a disconnect operation that corresponds to the disconnect switch.

In another embodiment, a non-transitory computer readable medium may include computer-executable instructions that may receive, at a drive, data associated with an alternating current (AC) power supply, a drive, a motor, or any combination thereof from one or more sensors. The computer-executable instructions may then send a first signal from the drive to a disconnect switch coupled between the AC power supply and the drive when the data is outside a range of values. Here, the first signal may cause the disconnect switch to open.

In yet another embodiment, a disconnect switch may include at least one pole that may conduct alternating current (AC) current between an AC power supply and an industrial automation drive. The disconnect switch may also include a control system that may communicatively couple to a drive control system that corresponds to the industrial automation drive. The control system may receive a signal from the drive control system, such that the signal may cause the at least one pole to open or close.

### DRAWINGS

These and other features, aspects, and advantages of the present invention will become better understood when the following detailed description is read with reference to the accompanying drawings in which like characters represent like parts throughout the drawings, wherein:
FIG. 1 illustrates a perspective view of an industrial automation drive that may be used in an industrial automation system, in accordance with embodiments presented herein;
FIG. 2 illustrates a block diagram of component parts of the industrial automation drive of FIG. 1, in accordance with embodiments presented herein;
FIG. 3 illustrates a block diagram of an industrial automation system employing the industrial automation drive of FIG. 1, in accordance with embodiments presented herein; and
FIG. 4 illustrates a block diagram of a drive control system employed by the industrial automation drive of FIG. 1, in accordance with embodiments presented herein;
FIG. 5 illustrates a flow chart of a method for opening a disconnect switch via the industrial automation drive of FIG. 1, in accordance with embodiments presented herein;
FIG. 6 illustrates a flow chart of a method for closing a disconnect switch via the industrial automation drive of FIG. 1, in accordance with embodiments presented herein; and
FIG. 7 illustrates a block diagram of bus supply system, in accordance with embodiments presented herein.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present disclosure are generally directed towards a network-controlled disconnect switch. In one embodiment, a drive control system may be communicatively coupled to a disconnect switch via a network or a direct communication link. As such, the drive control system may send commands to the disconnect switch to open and/or close quickly and on demand. Moreover, the drive control system may simultaneously control the operations of an industrial automation drive and the operations of the disconnect switch. In this manner, commands designated for the disconnect switch may be passed through the industrial automation drive to the disconnect switch, such that the industrial automation drive may monitor and control the operation of the disconnect switch.

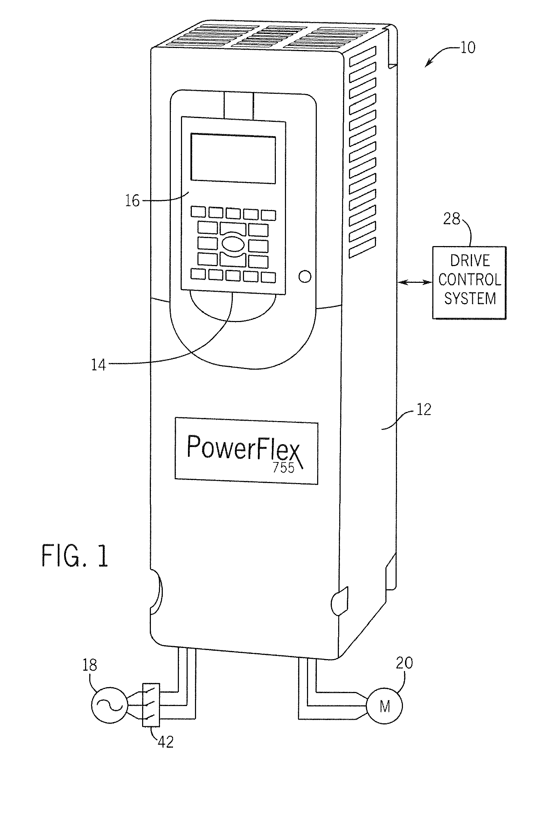

By way of introduction, FIG. 1 is a perspective view of an industrial automation drive 10 that may be coupled to a disconnect switch 42, in accordance with embodiments described herein. In one embodiment, the drive 10 may be a PowerFlex® drive manufactured by Rockwell Automation. The drive 10 may include a housing 12 having a receptacle 14 to hold a human interface module (HIM) 16, that may be used to program the drive 10, monitor alerts detected by the drive 10, control operations of a disconnect switch 42, or the like.

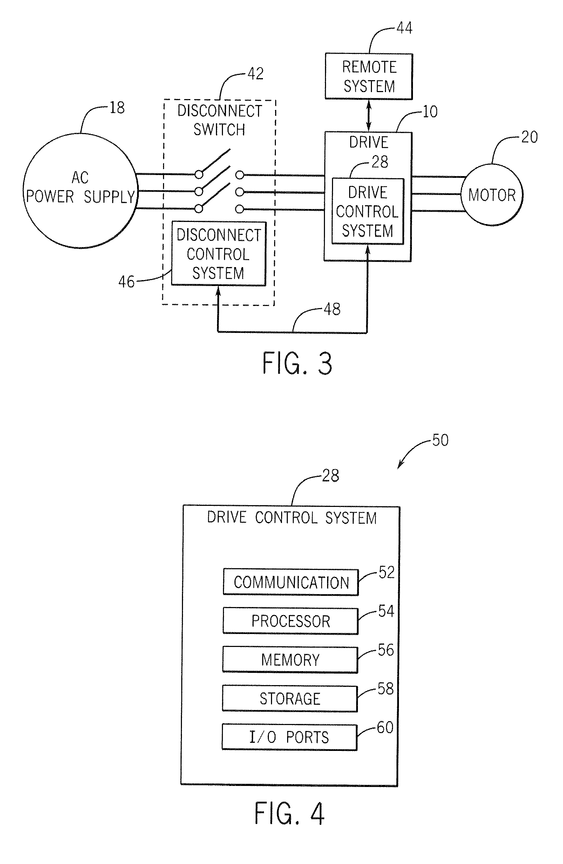

As described further below, the drive 10 may be adapted to receive three-phase power from an alternating-current (AC) power supply 18 and to convert a fixed frequency AC input power from the AC power supply 18 to controlled frequency AC output power that may be applied to a motor 20. The AC power supply 18 may include a generator or an external power grid. A variety of components or devices may be disposed within the drive 10 and may be used in the operation and control of a load such as the motor 20. As will be described further below, the operating characteristics of the drive 10 may be determined, in part, by a programming configuration of the drive 10. The programming configuration of the drive 10 may include any data, software, or firmware that may define the performance of the drive 10, the appearance or performance of a user interface of the drive 10, the performance or user interface appearance of any peripheral devices communicatively coupled to the drive, operations of a disconnect switch 42, or the like. As such, the programming configuration may include operating parameters, parameter customization data, and firmware for the drive 10, a disconnect switch 42, or any other device that may be communicatively coupled to the drive 10. In one embodiment, the programming configuration may be implemented by the drive 10 via a drive control system 28, which will be described in greater detail with reference to FIG. 4 below.

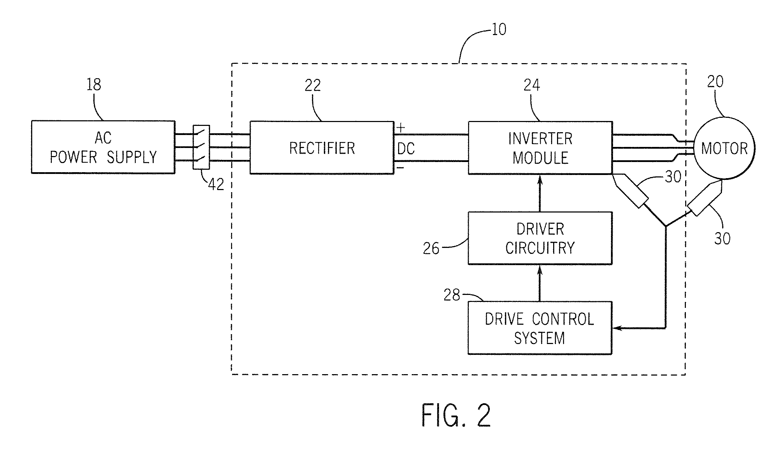

Keeping this in mind, FIG. 2 illustrates a block diagram of the drive 10 and provides additional details regarding the make-up of the drive 10. The drive 10 includes a rectifier 22 that receives a constant frequency three-phase AC voltage waveform from the AC power supply 18. The rectifier 22 may perform full wave rectification of the three-phase AC voltage waveform, outputting a direct current (DC) voltage to an inverter module 24. Although the AC power supply 18 has been described above as providing a constant frequency three-phase AC voltage waveform, it should be noted that the AC power supply 18 is not limited to providing a three-phase AC voltage waveform. Instead, it should be understood that the AC power supply 18 may also provide different waveforms such as a six-phase AC voltage waveform or the like.

The inverter module 24 may accept the positive and negative lines of the DC voltage from the rectifier 22 and may output a discretized three-phase AC voltage waveform at a desired frequency, independent of the frequency of AC power supply 18. Driver circuitry 26 may provide the inverter module 24 with appropriate signals, enabling the inverter module 24 to output the AC voltage waveform. The resulting AC voltage waveform may thereafter drive a load, such as the motor 20.

Drive control system 28 may be coupled to the driver circuitry 26 and may be programmed to provide signals to the driver circuitry 26 for driving the motor 20. In certain embodiments, the drive control system 28 may be programmed according to a specific drive configuration desired for a particular application. For example, the drive control system 28 may be programmed to respond to external inputs, such as reference signals, alarms, command/status signals, etc. The external inputs may originate from one or more relays or other electronic devices. The programming of the drive control system 28 may be accomplished through software configuration or firmware code that may be loaded onto an internal memory of the drive control system 28 or programmed via the HIM 16. The firmware of the drive control system 28 may respond to a defined set of operating parameters. The settings of the various operating parameters determine the operating characteristics of the drive 10. For example, various operating parameters may determine the speed or torque of the motor 20 or may determine how the drive 10 responds to the various external inputs. As such, the operating parameters may be used to map control variables within the drive 10 or to control other devices communicatively coupled to the drive 10. These variables include things like: speed presets, feedback types and values, computational gains and variables, algorithm adjustments, status and feedback variables, and programmable logic controller (PLC) like control programming.

The drive 10 and the motor 20 may also include one or more sensors 30 for detecting operating temperatures, voltages, currents, etc. With feedback data from the sensors 30, the drive control system 28 may keep detailed track of the various conditions under which the inverter module 24 may be operating. For example, the feedback data may include conditions such as actual motor speed, voltage frequency, power quality, alarm conditions, etc. The feedback data may then be used to control other devices such as the disconnect switch 42, which will be described in greater detail below.

In some embodiments, the drive 10 may be communicatively coupled to one or more peripheral devices. For example, the drive 10 may be coupled to a communications module that allows communication with a network. The communications module may be programmed with certain firmware and may include various operating parameters, such as data rate, used to define the communication performance of the drive 10. The drive 10 may also include a feedback module that may include various encoders, resolvers, motion feedback sensors, etc. that may be used to provide feedback data to the drive 10. The drive 10 may also include digital or analogue input/output (I/O) peripherals, and an enhanced safety board, for example. The peripheral devices may be included in an option card that is inserted into a communications port of the drive 10. All of the peripheral devices coupled to the drive 10 may be accessed through the HIM 16. As such, the HIM 16 may also obtain programming configuration, such as operating parameter information, and firmware, applicable to peripheral devices.

Keeping the foregoing in mind, FIG. 3 illustrates an embodiment of an industrial automation system 40 employing the drive 10 with a disconnect switch 42. The industrial automation system 40 may include the AC power supply 18, the disconnect switch 42, the drive 10, and the motor 20. As mentioned above, the drive 10 may include the rectifier 22 that may receive three-phase AC voltage from the AC power supply 18 and convert the AC voltage into a DC voltage. The drive 10 may also include the inverter module 24 that may then convert the DC voltage into a controllable AC voltage, which may then be used to control the operation of the motor 20.

To isolate the drive 10 from the AC power supply 18, the disconnect switch 42 may be opened, thereby removing the input AC voltage from the drive 10. As such, the disconnect switch 42 may include mechanical components that enable one or more poles of the disconnect switch 42 to open (i.e., break a circuit) and close. In this way, the disconnect switch 42 may protect the drive 10, the motor 20, and other downstream devices when the power from the AC power supply 18 may cause damage to the industrial automation system 40. For example, the disconnect switch 42 may open when the AC voltage from the AC power supply 18 is unbalanced, experiencing a fault, experiencing under-voltage or over-voltage conditions, increased levels of harmonics, or the like.

In certain embodiments, the disconnect switch 42 may be a circuit breaker, a molded case switch, or the like. The disconnect switch 42 may be a three-pole switch that may disconnect the three-phase AC power supply 18 from the drive 10. However, it should be noted that the disconnect switch 42 is not limited to a three-pole switch and may include any number of poles.

As mentioned above, the drive 10 may include the drive control system 28 that may control the operation of the drive 10, the motor 20, or the like. As such, the drive control system 28 may receive inputs that correspond to operating the drive 10, the motor 20, and the like. In one embodiment, the drive control system 28 may be communicatively coupled to a remote system 44, which may be used to control the drive 10, the motor 20, or the disconnect switch 42 via the drive control system 28 from a remote location away from where the industrial automation system 40 is located. In certain embodiments, the drive control system 28 may be communicatively coupled to the remote system 44 via a wireless network, a local area network, the Internet, or the like. However, it should be noted that the drive control system 28 may be communicatively coupled to the remote system 44 via a hard-wired connection, such as an Ethernet connection or the like.

The drive control system 28 may be communicatively coupled to a disconnect control system 46 via a communication link 48. The disconnect control system 46 may be an interface used to control the operation of the disconnect switch 42. As such, the disconnect control system 48 may include various devices, such as an optocoupler-tied contact, a relay-driven coil, or the like, which may control the operations of the disconnect switch 42 (e.g., when the disconnect switch 42 opens and closes). For example, the disconnect control system 46 may control the operation of the disconnect switch 42 based on an auxiliary miniature circuit breaker (MCB), a bell alarm, an operating closing coil, a trip release, a shunt trip, and the like. In certain embodiments, the drive control system 28 may send commands to the disconnect control system 46 via the communication link 48 to engage or disengage the auxiliary miniature circuit breaker (MCB), the bell alarm, the operating closing coil, the trip release, the shunt trip, or the like, thereby closing or opening the disconnect switch 42.

The communication link 48 may enable the drive control system 28 to communicatively couple to the disconnect switch 42. As such, the communication link may include a wired or wireless communication channel between the drive control system 28 and the disconnect control system 46. In certain embodiments, the communication link 48 may be part of a local area network (LAN) architecture a network and may include mediums such as Ethernet, Wi-Fi, supervisory control and data acquisition (SCADA), mobile telecommunications technology (e.g., 3G, 4G, 4LTE), ProfiNet, Ethernet Industrial Protocol (IP), other industrial control protocols, and the like. As such, the drive control system 28 may control the operation of the disconnect switch 42 by sending signals to the disconnect control system 46 via the communication link 48.

To effectively enable the drive control system 28 to control the operation of the drive 10 and the disconnect switch 42, the drive control system 28 may include various components that may be used to receive data, process data, communicate data, store data, and the like. Keeping this in mind and referring to FIG. 4, a detailed block diagram 50 of the drive control system 28 is illustrated. As shown in the figure, the drive control system 28 may include a communication component 52, a processor 54, a memory 56, a storage 58, input/output (I/O) ports 60, and the like. The communication component 52 may be a wireless or wired communication component that may facilitate communication between the drive 10, the disconnect switch 42, the remote system 44, other industrial automation systems, and the like via the communication link 48 or the like. The processor 54 may be any type of computer processor or microprocessor capable of executing computer-executable code. The memory 56 and the storage 58 may be any suitable articles of manufacture that can serve as media to store processor-executable code, data, or the like. These articles of manufacture may represent non-transitory computer-readable media (i.e., any suitable form of memory or storage) that may store the processor-executable code used by the processor 54 to perform the presently disclosed techniques.

Generally, the drive control system 28 may receive data related to the industrial automation system 40, the power received from the AC power supply 18, the operations within the drive 10, the operations of the motor 20, or the like from the sensors 30 via I/O ports 60. As such, the drive control system 28 may interpret the received data and determine whether the drive 10, the motor 20, or any other downstream devices may be susceptible to an adverse condition such as a fault or the like. When the drive control system 28 determines that a probability of a threat to the operation or life of the drive 10, the motor 20, or any other downstream devices may exceed some threshold, the drive control system 28 may send a signal to the disconnect control system 46 via the communication link 48 to open the disconnect switch 42. As such, in one embodiment, the drive control system 28 may trip a device such as an optocoupler-tied contact, a relay-driven coil, or the like, which may be part of the disconnect control system 46, thereby triggering the disconnect control system 46 to open the disconnect switch 42.

In another embodiment, the disconnect control system 46 may not include any relays, MCBs, or the like. Instead, the disconnect control system 46 may include similar components to those illustrated as part of the drive control system 28 in FIG. 4. In this case, the drive control system 28 may send a signal to the disconnect control system 46 to open and/or close the disconnect switch 42 on demand.

In some instances, the drive control system 28 may monitor various parameters in the industrial automation system 40 and may send a signal to the disconnect control system 46 to open and/or close the disconnect switch 42 based on the monitored parameters. For instance, the drive control system 28 may receive data from the sensors 30 that may sense, as mentioned above, actual motor speed, voltage frequency, power quality, alarm conditions, etc. Additionally, the sensors 30 may also sense a line-to-line voltage from the AC power supply 18, a line-to-ground voltage from the AC power supply 18, a current for each phase of the AC power supply 18, and the like. When the data (e.g., measurements) received by the drive control system 28 falls outside an expected range of values, the drive control system 28 may send a command to the disconnect control system 46 via the communication link 48 to open the disconnect switch 42. The command to open the disconnect switch 42 may include de-activating or removing a voltage from a closing coil that may be used to control when the disconnect switch 14 opens or closes. Alternatively, the command to open the disconnect switch 42 may include sending a signal to the disconnect control system 46 to open the disconnect switch 46, which may be directly controlled by the disconnect control system 46. In certain embodiments, the drive control system 28 may control each individual pole of the disconnect switch 42. That is, the drive control system 28 may specify one of a number of poles in the disconnect switch 42 to open.

Moreover, since the disconnect control system 46 may be directly controlled by the drive control system 28 via the communication link 48, the disconnect switch 42 may also be opened or closed via the remote system 44 or the like by sending a command to the drive control system 28 to open or close the disconnect switch 42. As such, the drive control system 28 may be used to coordinate the operation of the drive 10 and the disconnect switch 42.

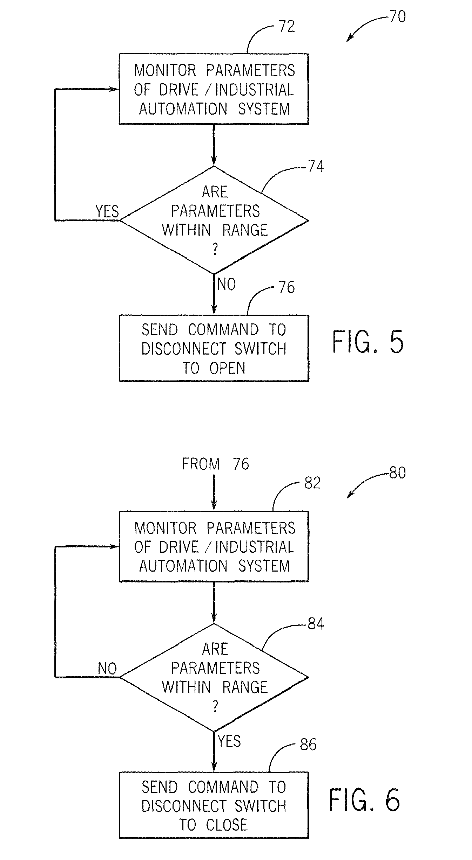

For example, FIG. 5 illustrates a flow chart of a method 70 for controlling an operation of the disconnect switch 42. In particular, the method 70 depicts a flow chart for opening the disconnect switch 42. In certain embodiments, the processor 54 of the drive control system 28 may perform the method 70.

Referring now to FIG. 5, at block 72, the drive control system 28 may monitor various parameters associated with the drive 10, the industrial automation system 40, or the like. In one embodiment, the drive control system 28 may receive data from the sensors 30 that may indicate certain operating characteristics of the drive 10, the motor 20, or the like. In addition to the data received from the sensors 30, the drive control system 28 may predict or determine additional data related to the industrial automation system 40 based on the received data. For example, if the temperature of the motor 20 exceeds some threshold, the drive control system 28 may determine that the AC power supply 18 or the drive 10 may be producing larger than expected harmonics or the like. Other examples of monitored parameters may include, and are not limited to, a power quality received from the AC power supply 18, fault conditions (e.g., ground fault, line-to-line fault) within the industrial automation system 40, diode or insulated-gate bipolar transistor (IGBT) failure in the rectifier 22 and/or the inverter module 24, overcurrent and/or under-voltage alarms, and the like.

At block 74, the drive control system 28 may determine whether the monitored parameters are within some range of values or limits. In one embodiment, the range of values may be determined based on historical data received by the drive control system 28. Alternatively, the range of values may be input by a user via the HIM 16 or the like.

If, at block 74, the parameters monitored by the drive control system 28 are within their respective expected ranges, the drive control system 28 may return to block 72 and continue monitoring the various parameters associated with the drive 10, the industrial automation system 40, or the like. If, however, at block 74, the parameters monitored by the drive control system 28 are not within their respective expected ranges, the drive control system 28 may proceed to block 76. At block 76, the drive control system 28 may send a command to the disconnect control system 46 to open the disconnect switch 42 as described above.

In certain embodiments, in lieu of determining whether the monitored parameters are within some range of values at block 74, certain parameters may be evaluated based on whether a condition (e.g., alarm) exists or does not exist. For example, the monitored parameters may include data indicating whether a fault has been detected in the industrial automation system 40, the drive 10, the AC power supply 18, or the like. In this case, if the monitored parameter indicates that a certain condition exists, the drive control system 28 may proceed to block 76 and send a command to the disconnect control system 46 to open the disconnect switch 42.

After the disconnect switch 42 opens, the drive control system 28 may be capable of closing the disconnect switch 42 when the monitored parameters return to within their respective ranges or their expected conditions. For instance, FIG. 6 depicts a method 80 for closing the disconnect switch 42 via the drive control system 28. Like the method 70 described above, the processor 54 of the drive control system 28 may perform the method 80.

In certain embodiments, after the drive control system 28 sends the command to the disconnect switch 42 to open at block 76, the drive control system 28 may proceed to block 82 of the method 80 and monitor various parameters associated with the drive 10, the industrial automation system 40, or the like, as described above with respect to block 72.

Like block 74 described above, at block 84, the drive control system 28 may determine whether the monitored parameters fall within some range of values or limits. The drive control system 28 may determine whether certain conditions exist or do not exist, as described above.

If, at block 84, the parameters monitored by the drive control system 28 are still not within their respective expected ranges or indicate that certain conditions continue to exist, the drive control system 28 may return to block 82 and continue monitoring the various parameters associated with the drive 10, the industrial automation system 40, or the like. If, however, at block 84, the parameters monitored by the drive control system 28 are back within their respective expected ranges or indicate that the certain conditions are no longer present, the drive control system 28 may proceed to block 86. At block 86, the drive control system 28 may send a command to the disconnect control system 46 to close the disconnect switch 42 as described above.

Although the method 80 has been described as being performed after block 76 of FIG. 5, it should be noted that in certain embodiments, the method 80 may be performed independently by the drive control system 28 without performing the method 70. As such, the method 80 may be used to commission or start the operation of the motor once various parameter values were within a particular range of values or certain conditions were satisfied.

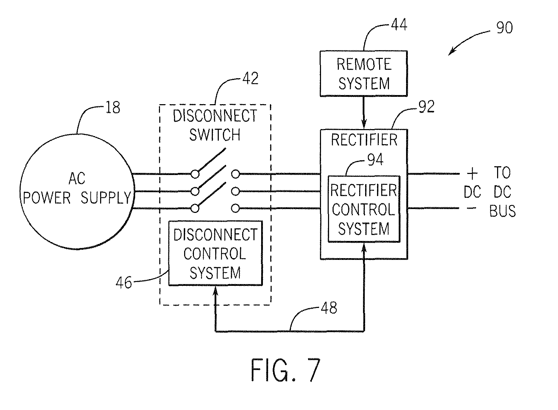

Moreover, although the method 70 and the method 80 have been described above as being performed using the drive 10 within the industrial automation system 40, it should be noted that the method 70 and the method 80 may also be performed using the drive 10 that may be part of other systems such as a bus supply system 90, as illustrated in FIG. 7. Referring now to FIG. 7, the bus supply system 90 may include the AC power supply 18, the disconnect switch 42, the remote system 44, the disconnect control system 46, and the communication link 48 as described above. Additionally, the bus supply system 90 may include a rectifier 92 that may convert the AC voltage provided by the AC power supply 18 into a direct current (DC) voltage. The DC voltage may then be provided to a DC bus or the like, which may be distributed to a DC load or system.

In one embodiment, the rectifier 92 may include a rectifier control system 94 that may control the operation of the rectifier 920and the disconnect switch 42. In certain embodiments, the rectifier control system 94 may include similar components as illustrated in the block diagram 50 of the drive control system 28 in FIG. 4. As such, the rectifier control system 94 may perform the method 70 and the method 80 using the processor 54 or the like based on parameters monitored with respect to the bus supply system 90. Moreover, like the drive control system 28, the rectifier control system 94 may send signals to the disconnect control system 46 to open and/or close the disconnect switch 42 on demand via the communication link 48.

While only certain features of the invention have been illustrated and described herein, many modifications and changes will occur to those skilled in the art. It is, therefore, to be understood that the appended claims are intended to cover all such modifications and changes as fall within the true spirit of the invention.

The following is a list of further preferred embodiments of the invention:
1. A system, comprising:
   a disconnect switch configured to receive alternating current (AC) power from an AC power supply; and
      a drive configured to receive the AC power via the disconnect switch, wherein the drive comprises:
      a processor configured to communicatively couple to the disconnect switch, wherein the processor is configured to:
      control a drive operation that corresponds to the drive; and
      control a disconnect operation that corresponds to the disconnect switch.
2. The system of embodiment I,
   wherein the processor is communicatively coupled
   to the disconnect switch via an Ethernet connection.
3. The system of embodiment I,
   wherein the processor is communicatively coupled
   to the disconnect switch via a wireless connection.
4. The system of embodiment I, wherein the disconnect operation comprises opening the disconnect switch, closing the disconnect switch, or any combination thereof.
5. The system of embodiment I, wherein the disconnect switch comprises a plurality of poles.
6. The system of embodiment 5, wherein the processor is configured to control a respective disconnect operation of a respective pole of the plurality of poles.
7. The system of embodiment I, wherein the processor is configured to:
   monitor one or more parameters associated with the AC power supply and the drive; and
   control the disconnect operation based at least in part on the parameters.
8. A non-transitory computer readable medium comprising computer- executable instructions configured to:
   receive, at a drive, data associated with an alternating current (AC) power supply, a drive, a motor, or any combination thereof from one or more sensors; and
   initiate sending a signal from the drive to a disconnect switch coupled between the AC power supply and the drive when the data is outside a range of values, wherein the signal is configured to open the disconnect switch.
9. The non-transitory computer readable medium of embodiment 8, wherein the data comprises a motor speed, a voltage frequency, power quality, one or more alarm conditions, or any combination thereof.
10. The non-transitory computer readable medium of embodiment 9, wherein the alarm conditions comprise a ground fault, a line-to-line fault, or any combination thereof.
11. The non-transitory computer readable medium of embodiment 9, wherein the computer-executable instructions are configured to send the signal from the drive to the disconnect switch when the alarm conditions are present.
12. The non-transitory computer readable medium of embodiment 8, wherein the computer executable instructions are configured to initiate sending the signal from the drive to the disconnect switch via a wired connection.
13. The non-transitory computer readable medium of embodiment 12, wherein the wired connection is an Ethernet connection.
14. The non-transitory computer readable medium of embodiment 8, wherein the computer executable instructions are configured to initiate sending the signal from the drive to the disconnect switch via a wireless connection.
15. The non-transitory computer readable medium of embodiment 8, wherein the computer-executable instructions are configured to send an additional signal from the drive to the disconnect switch when the data returns to the range of values, wherein the additional signal is configured to close the disconnect switch.
16. A disconnect switch, comprising:
   at least one pole configured to couple an alternating current (AC) power supply to an industrial automation drive;
   a control system configured to communicatively couple to a drive control system that corresponds to the industrial automation drive, wherein the control system is configured to receive a signal from the drive control system, wherein the signal is configured to open or close the at least one pole.
17. The disconnect switch of embodiment 16, wherein the control system comprises
   an optocoupler-tied contact, a relay-driven coil, an auxiliary miniature circuit breaker, a bell alarm, an operating closing coil, a trip release, a shunt trip, or any combination thereof.
18. The disconnect switch of embodiment 16,
   wherein the control system is communicatively coupled to the drive control system via Ethernet, WiFi, supervisory control and data acquisition (SCADA), mobile telecommunications technology, or any combination thereof.
19. The disconnect switch of embodiment 16, wherein the control system comprises a processor configured to control an operation of the at least one pole of the disconnect switch.
20. The disconnect switch of embodiment 16, wherein the control system is configured to remove at least one voltage from at least one closing coil configured to control opening and closing of the at least one pole.

## Claims

1. A system, comprising:
a disconnect switch configured to receive alternating current (AC) power from an AC power supply; and
a drive configured to receive the AC power via the disconnect switch, wherein the drive comprises:
a processor configured to communicatively couple to the disconnect switch, wherein the processor is configured to:
control a drive operation that corresponds to the drive; and
control a disconnect operation that corresponds to the disconnect switch.

2. The system of claim I, wherein the processor is communicatively coupled to the disconnect switch via an Ethernet connection.

3. The system of claim 1 or 2, wherein the processor is communicatively coupled to the disconnect switch via a wireless connection.

4. The system of any one of claims 1 to 3, wherein the disconnect operation comprises opening the disconnect switch, closing the disconnect switch, or any combination thereof.

5. The system of any one of claims 1 to 4 wherein the disconnect switch comprises a plurality of poles.

6. The system of claim 5, wherein the processor is configured to control a respective disconnect operation of a respective pole of the plurality of poles.

7. The system of any one of claims 1 to 6 , wherein the processor is configured to:
monitor one or more parameters associated with the AC power supply and the drive; and
control the disconnect operation based at least in part on the parameters.

8. A non-transitory computer readable medium comprising computer- executable instructions configured to:
receive, at a drive, data associated with an alternating current (AC) power supply, a drive, a motor, or any combination thereof from one or more sensors; and
initiate sending a signal from the drive to a disconnect switch coupled between the AC power supply and the drive when the data is outside a range of values, wherein the signal is configured to open the disconnect switch.

9. The non-transitory computer readable medium of claim 8, wherein the data comprises a motor speed, a voltage frequency, power quality, one or more alarm conditions, or any combination thereof.

10. The non-transitory computer readable medium of claim 9, wherein the alarm conditions comprise a ground fault, a line-to-line fault, or any combination thereof; or
wherein the computer-executable instructions are configured to send the signal from the drive to the disconnect switch when the alarm conditions are present.

11. The non-transitory computer readable medium of any one of claims 8 to 10, wherein the computer executable instructions are configured to initiate sending the signal from the drive to the disconnect switch via a wired connection; and/or
wherein the wired connection is an Ethernet connection.

12. The non-transitory computer readable medium of any one of claims 8 to 11, wherein the computer executable instructions are configured to initiate sending the signal from the drive to the disconnect switch via a wireless connection.

13. The non-transitory computer readable medium of any one of claims 8 to 12, wherein the
computer-executable instructions are configured to send an additional signal from the drive to the disconnect switch when the data returns to the range of values, wherein the additional signal is configured to close the disconnect switch.

14. A disconnect switch, comprising:
at least one pole configured to couple an alternating current (AC) power supply to an industrial automation drive;
a control system configured to communicatively couple to a drive control system that corresponds to the industrial automation drive, wherein the control system is configured to receive a signal from the drive control system, wherein the signal is configured to open or close the at least one pole.

15. The disconnect switch of claim 14, wherein the control system comprises
an optocoupler-tied contact, a relay-driven coil, an auxiliary miniature circuit breaker, a bell alarm, an operating closing coil, a trip release, a shunt trip, or any combination thereof; or
wherein the control system is communicatively coupled to the drive control system via Ethernet, WiFi, supervisory control and data acquisition (SCADA), mobile telecommunications technology, or any combination thereof; or
wherein the control system comprises a processor configured to control an operation of the at least one pole of the disconnect switch; or
wherein the control system is configured to remove at least one voltage from at least one closing coil configured to control opening and closing of the at least one pole.
